# EUROPÄISCHE PATENTSCHRIFT

(11) **EP 2 753 503 B1**
(45) Veröffentlichungstag und Bekanntmachung des Hinweises auf die Patenterteilung: **26.08.2015**
(21) Anmeldenummer: 12765992.8
(22) Anmeldetag: 10.09.2012
(51) Int. Cl.: B60R 13/04, B60J 10/00

(54) **ZIERBLENDE FÜR EINE FAHRZEUGTÜR**
DECORATIVE PANEL FOR A VEHICLE DOOR
ENJOLIVEUR POUR PORTE DE VÉHICULE

(30) Priorität: 10.09.2011 DE 102011113179
(43) Veröffentlichungstag der Anmeldung: 16.07.2014
(73) Patentinhaber: Audi AG, 85045 Ingolstadt (DE)
(72) Erfinder: HALBRITTER, Johann, 85139 Wettstetten (DE)
(86) Internationale Anmeldenummer: PCT/EP2012/003779
(87) Internationale Veröffentlichungsnummer: WO 2013/034308

(56) Entgegenhaltungen:
- EP-A2- 1 584 517
- DE-A1- 4 342 758
- DE-A1- 19 741 538
- DE-A1-102009 058 128
- DE-U1- 20 201 528

## Beschreibung

Die Erfindung betrifft eine Zierblende für eine Fahrzeugtür, aufweisend einen Blendenbasisteil mit einer im eingebauten Zustand von außen sichtbaren Zierfläche und einer zur Fahrzeugmitte weisenden Innenfläche, sowie einen randseitigen Blendenumgriff zur Aufnahme eines Türflansches. Weiterhin wird ein Verfahren zum Verbau einer solchen Zierblende, sowie ein Fahrzeug mit einer solchen Zierblende gezeigt.

Derartige Zierblenden werden im Fahrzeugbau zu Verkleidung von Säulen an der Außenseite einer Fahrzeugtür eingesetzt. Dazu weist die Zierblende einen flächigen Blendenbasisteil auf, der die Säule überdeckt und dem Betrachter nach außen hin eine zumeist lackierte oder polierte Zierfläche zeigt. Solche Zierblenden sind unter anderem in der DE 10 2006 038 658 A1,der DE 41 42 599 A1 und der DE 10 2009 058 128 A1 gezeigt.

Die DE 43 42 758 A1 offenbart eine Zierblende für eine Fahrzeugtür, aufweisend einen Blendenbasisteil mit einer im eingebauten Zustand von außen sichtbaren Zierfläche und einer zur Fahrzeugmitte weisenden Innenfläche, sowie einen von der Innenfläche abgehenden Steg, der zur Lagefestlegung in Fahrzeugquerrichtung mit einer türseitigen Führung zusammenwirkt. Ein randseitiger Blendenumgriff dient der Aufnahme eines Einlegeteils, wobei der Blendenumgriff mit dem Einlegeteil über ein Befestigungsmittel mit einem Türflansch zur Einstellung einer Toleranzlage in allen Fahrzeugrichtungen verbunden ist. Als Nachteil ist zu nennen, dass die Toleranzlage durch das Befestigungsmittel nur sehr schwer und aufwändig eingestellt werden kann, da zu viele Freiheitsgrade vorherrschen.

Die gattungsbildende DE 202 01 528 U1 zeigt eine Säulenblende für die Säulenverkleidung an einem Fahrzeug, wobei die Säulenblende einen Deckschenkel mit einer hochglänzenden Sichtfläche aufweist. Die Säulenblende ist über geformte Profilaufnahmen zur direkten Befestigung über Formschluss an der Säule des Fahrzeugs und zusätzlichen Bohrungen mit Befestigungsmitteln an der Säule des Fahrzeugs befestigbar. Dazu steht von dem Deckschenkel ein weiterer Schenkel ab, der an der Säule zur Anlage kommt und mit dieser verschraubt wird. Nachteilig ist, dass der weitere Schenkel weit in Richtung Fahrzeugmitte ragt und die Befestigungsmittel somit nur schwer erreichbar sind. Zudem werden diese im eingebauten Zustand durch Dichtungen für eine Fensterscheibe und die Fensterscheibe selbst überdeckt, so dass vor eventuellen Einstellarbeiten zur Anpassung der Toleranzlage erst ein freier Zugang zu den Befestigungsmitteln geschaffen werden muss. All dies ist sehr zeitaufwändig, was sich insbesondere in der Massenproduktion bei einem gewissen Prozentsatz von nachzuarbeitenden Säulenblenden in erhöhten Produktionskosten niederschlägt.

Aufgabe der vorliegenden Erfindung ist es daher eine Zierblende für eine Fahrzeugtür, ein Verfahren zum Verbau einer solchen Zierblende, sowie ein Fahrzeug mit einer solchen Zierblende bereitzustellen, die einen einfachen Ein- und Ausbau der Zierblende, sowie eine einfache, schnelle und präzise Einstellung der Toleranzlage gewährleisten.

Diese Aufgabe wird durch die Merkmale des Patentanspruchs 1 bzw. 7 gelöst.

Ein Fahrzeug mit mindestens einer erfindungsgemäßen Zierblende ist in Patentanspruch 10 beansprucht.

Eine Zierblende für eine Fahrzeugtür weist einen Blendenbasisteil mit einer im eingebauten Zustand von außen sichtbaren Zierfläche und einer zur Fahrzeugmitte weisenden Innenfläche, sowie einen randseitigen Blendenumgriff zur Aufnahme eines Türflansches, auf, wobei ein von der Innenfläche abgehender Steg zur Lagefestlegung in Fahrzeugquerrichtung mit einer türseitigen Führung zusammenwirkt und der Blendenumgriff mit dem Türflansch über zumindest ein Befestigungsmittel zur Einstellung einer Toleranzlage in Fahrzeuglängsrichtung und/oder Fahrzeughochrichtung verbunden ist.

Indem der Steg im Zusammenwirken mit der türseitigen Führung nur eine Lagefestlegung in Fahrzeugquerrichtung bildet und das zumindest eine Befestigungsmittel zur Einstellung einer Toleranzlage in Fahrzeuglängsrichtung und/oder Fahrzeughochrichtung ausgebildet ist, liegt ein statisch eindeutig bestimmtes System vor. Auch der Blendenumgriff dient im Übrigen zusammen mit dem Türflansch der Lagefestlegung in Fahrzeugquerrichtung. Durch Betätigen des zumindest einen Befestigungsmittels kann die Zierblende in Fahrzeuglängsrichtung und/oder Fahrzeughochrichtung so lange verschoben werden, bis eine gewünschte Toleranzlage in Bezug auf die umliegenden Türbauteile erreicht ist. Neben der Einstellung der Toleranzlage dient das zumindest eine Befestigungsmittel im weiteren Verlauf auch der dauerhaften Lagefestlegung. In einer besonders bevorzugten Ausführungsform ist das zumindest eine Befestigungsmittel auch im eingebauten Zustand der Zierblende noch zu erreichen, wodurch die Toleranzlage der Zierblende jederzeit schnell und einfach angepasst werden kann. Da der Steg lediglich die Lägefestlegung in Fahrzeugquerrichtung übernimmt und keine Befestigungsmittel mehr aufzunehmen hat, kann dieser deutlich kleiner ausfallen, was wiederum den Verbau der Zierblende erleichtert. So ist es beispielsweise möglich, dass die türseitige Führung als ein kurzer Flansch ausgebildet ist, in den der Steg nach Art von Nut und Feder eingreift. Alternativ dazu kann der Steg entlang seiner Längserstreckung unterbrochen sein und in entsprechende Aussparungen der Fahrzeugtür eingreifen. Der Blendenumgriff ist ein randseitiger und u-förmiger Abschnitt des Blendenbasisteils, der einen von einer Säule der Fahrzeugtür gebildeten Türflansch umgreift. An der Säule können ferner noch Türdichtungen angeordnet sein. Der Blendenbasisteil ist vorzugsweise so groß, dass die Säule von der Zierfläche vollständig abgedeckt wird.

In einer bevorzugten Ausführung ist das zumindest eine Befestigungsmittel in korrespondierende Öffnungen des Blendenumgriffs und des Türflansches einsetzbar. Zur Verbindung von Blendenumgriff und Türflansch weisen beide jeweils eine Öffnung auf, die im eingebauten Zustand im Wesentlichen koaxial zueinander liegen. In diese Öffnungen wird das Befestigungsmittel eingeführt und entweder form- oder kraftschlüssig darin befestigt, wobei die Befestigungsart weiterhin eine Einstellung der Toleranzlage zulassen sollte.

In einer bevorzugten Ausführung ist der Blendenumgriff mit dem Türflansch durch mindestens zwei Befestigungsmittel verbunden, wobei ein erstes Befestigungsmittel zur Lagefestlegung in Fahrzeuglängsrichtung und Fahrzeughochrichtung und ein zweites Befestigungsmittel zur Lagefestlegung in Fahrzeuglängsrichtung dient. Beide Befestigungsmittel übernehmen somit eine Lagefestlegung bzw. Einstellung der Toleranzlage in Fahrzeuglängsrichtung. Werden die Befestigungsmittel ausreichend weit voneinander beabstandet, so lassen sich der obere und der untere Teil der Zierblende unabhängig voneinander einstellen. Die Lagefestlegung bzw. Einstellung der Toleranzlage in Fahrzeughochrichtung ist weniger kritisch und kann daher nur mit einem Befestigungsmittel bewerkstelligt werden.

In einer bevorzugten Ausführung sind die Befestigungsmittel als Exzenter ausgebildet. Durch ein Verdrehen des Exzenters bewegt sich die Zierblende relativ zu dem Türflansch, wodurch die Toleranzlage einstellbar ist. Ansonsten dient der Exzenter der dauerhaften Lagefestlegung. In dem Blendenumgriff kann eine Skala mit Nullpunkt und in dem Exzenter ein Marker eingeprägt sein, die in Konstruktionslage aufeinander zeigen. So lässt sich die Einstellung besonders einfach und leicht nachvollziehbar gestalten. Die Exzenter sind bevorzugt aus einem Kunststoff gefertigt.

In einer bevorzugten Ausführung bilden die Exzenter mit dem Blendeumgriff einen Formschluss aus. Zur Ausbildung eines Formschlusses kann die Öffnung im Blendenumgriff Freisparungen aufweisen. An diesen Stellen können entsprechende Federhaken des Exzenters eingeführt werden, wobei diese sich bei Verdrehen des Exzenters mit dem Blendenumgriff verrasten. Zur noch besseren Befestigungen kann die Öffnung im Blendenumgriff von Vertiefungen gesäumt sein, die mit einer oder zwei korrespondierenden Rastnasen des Exzenters verrasten können.

In einer bevorzugten Ausführung sind eine Öffnung im Türflansch als Rundloch und eine weitere Öffnung im Türflansch als Langloch ausgebildet. Die als Rundloch ausgebildete Öffnung im Türflansch erlaubt mit eingesetztem Exzenter eine Einstellung der Toleranzlage in Fahrzeuglängsrichtung und Fahrzeughochrichtung, während das Langloch mit eingesetztem Exzenter nur eine Einstellung der Toleranzlage in Fahrzeuglängsrichtung erlaubt.

Ein Verfahren zum Verbau einer Zierblende an einer Fahrzeugtür, wobei die Zierblende einen Blendenbasisteil mit einer im eingebauten Zustand von außen sichtbaren Zierfläche und einer zur Fahrzeugmitte weisenden Innenfläche, sowie einen randseitigen Blendenumgriff zur Aufnahme eines Türflansches aufweist, umfasst die folgenden Schritte:
- Einführen einer türseitigen Führung in einen von der Innenfläche abgehenden Steg;
- Einführen des Türflansches in den Blendenumgriff;
- Verbinden des Blendenumgriffs mit dem Türflansch durch zumindest ein Befestigungsmittel;
- Einstellen einer Toleranzlage des Blendenbasisteils in Fahrzeuglängsrichtung und/oder Fahrzeughochrichtung mittels des zumindest einen Befestigungsmittels.

Indem die Zierblende zunächst nur auf den Türflansch bzw. die Führung aufgesteckt wird, entfallen die bislang notwenigen Schraubarbeiten in schwer zugänglichen Räumen. Da die türseitige Führung zusammen mit dem Steg auf der Innenfläche und der Türflansch zusammen mit dem Blendenumgriff nur eine Lagefestlegung in Fahrzeugquerrichtung bilden, wird in einem folgenden Verfahrensschritt zumindest ein Befestigungsmittel zur Verbindung von Blendenumgriff mit Türflansch eingesetzt. Durch Betätigen des zumindest einen Befestigungsmittels kann eine Toleranzlage in Fahrzeuglängsrichtung und Fahrzeughochrichtung schnell, einfach und präzise eingestellt werden. Im übrigen hält das Befestigungsmittel die eingestellte Toleranzlage dauerhaft. Dieser Bereich ist ferner sehr gut zugänglich, so dass hierbei keine Spezialwerkzeug benötigt werden und der Schritt sehr schnell und einfach ausführbar ist.

In einer bevorzugten Ausführung des Verfahrens verbinden mindestens zwei Befestigungsmittel den Blendenumgriff mit dem Türflansch, wobei ein erstes Befestigungsmittel zur Einstellung einer Toleranzlage in Fahrzeuglängsrichtung und Fahrzeughochrichtung und ein zweites Befestigungsmittel zur Einstellung einer Toleranzlage in Fahrzeuglängsrichtung dient. Beide Befestigungsmittel übernehmen somit eine Lagefestlegung bzw. Einstellung der Toleranzlage in Fahrzeuglängsrichtung. Werden die Befestigungsmittel ausreichend weit voneinander beabstandet, so lassen sich der obere und der untere Teil der Zierblende unabhängig voneinander einstellen. Die Lagefestlegung bzw. Einstellung der Toleranzlage in Fahrzeughochrichtung ist weniger kritisch und kann daher nur mit einem Befestigungsmittel bewerkstelligt werden.

In einer bevorzugten Ausführung des Verfahrens weisen der Blendenumgriff und der Türflansch korrespondierende Öffnungen auf, in denen jeweils ein als Exzenter ausgebildetes Befestigungsmittel angeordnet wird. Beide Öffnungen liegen im eingebauten Zustand im Wesentlichen koaxial zueinander. In diese Öffnungen wird jeweils ein Exzenter eingesetzt, dessen Verdrehung die Einstellung der Toleranzlage bewirkt.

Ein Fahrzeug hat mindestens eine erfindungsgemäße Zierblende, vorzugsweise jedoch eine Zierblende je Fahrzeugtür. Bei einer viertürigen Limousine werden beispielsweise die Säulen, die die B-Säule bilden, mit der Zierblende verkleidet. Durch die Befestigungsmittel kann die Toleranzlage der nebeneinanderliegenden Zierblenden aufeinander eingestellt werden.

Weitere Einzelheiten und Vorteile der Erfindung ergeben sich aus der nachstehenden Beschreibung eines bevorzugten Ausführungsbeispiels unter die Bezugnahme auf die Zeichnungen.

Darin zeigen:
Fig. 1 eine seitliche Teilansicht eines Fahrzeugs mit zwei verbauten Zierblenden;
Fig. 2 eine Schnittansicht durch eine Fahrzeugtür mit verbauter Zierblende;
Fig. 3 eine Rückansicht einer Fahrzeugtür mit verbauter Zierblende;
Fig. 4 einen Exzenter im verbauten Zustand;
Fig. 5 einen Exzenter;
Fig. 6 eine Öffnung zur Aufnahme eines Exzenters;
Fig. 7 einen in die Fahrzeugtür eingesetzten Exzenter.

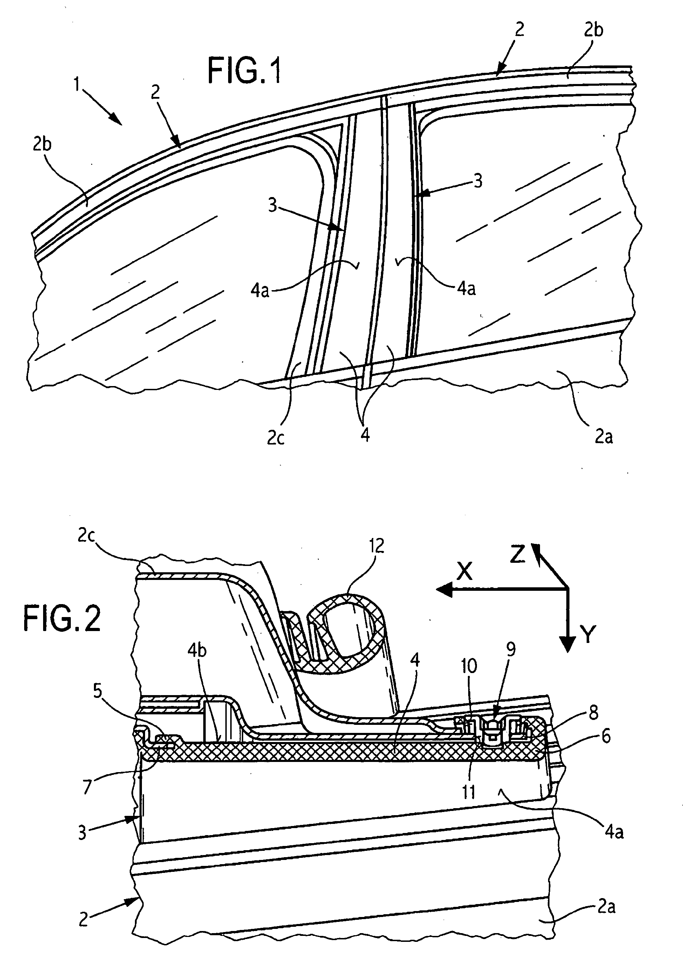

Gemäß der Fig. 1 hat ein Fahrzeug 1 mindestens eine Fahrzeugtür 2, vorliegend zwei Fahrzeugtüren 2 je Seite. Die Fahrzeugtüren 2 bestehen aus einem Türkörper 2a und einem Türrahmen 2b, der eine Fensterscheibe umrahmt. Jeder Türrahmen 2b hat mindestens eine im Wesentlichen senkrecht stehende Säule 2c. Die Säule 2c wird durch Überlagerung mit einer Zierblende 3 nach außen hin verkleidet, so dass der Betrachter statt der Säule 2c nur eine dekorative Zierfläche 4a eines Blendenbasisteils 4 zu sehen bekommt.

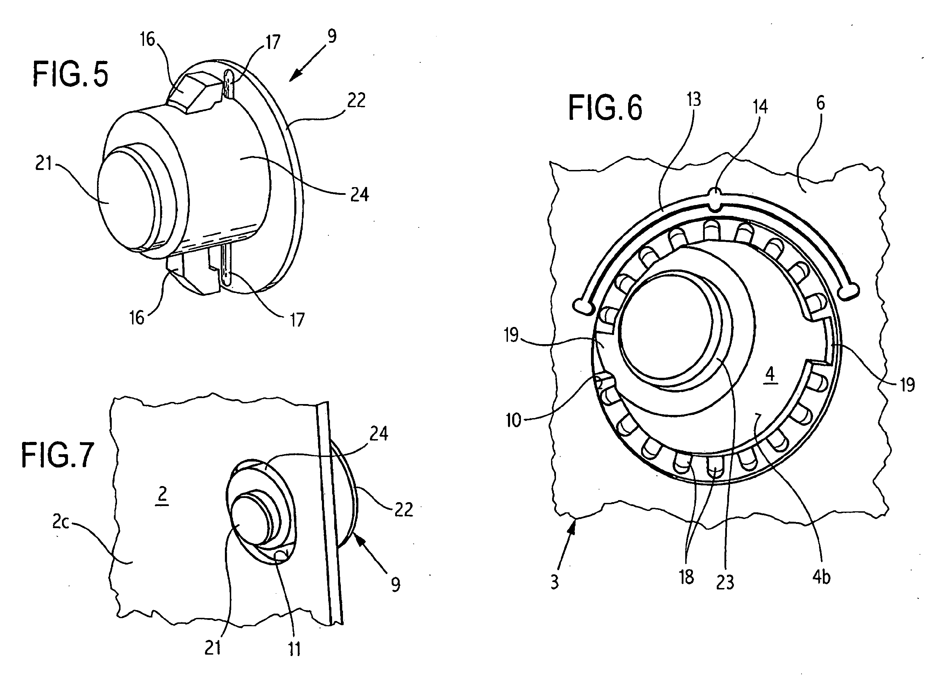

Die Fig. 2 zeigt in einer Schnittansicht, wie die Zierblende 3 an der Säule 2c befestigt ist. Das Blendenbasisteil 4 hat auf einer der Zierfläche 4a gegenüberliegenden Seite eine Innenfläche 4b, von der ein Steg 5 abgeht, der entlang einer Längserstreckung des Blendenbasisteils 4 verläuft. In den Steg 5 ist eine Führung 7 einführbar, wodurch eine Lagefestlegung in Fahrzeugquerrichtung Y erfolgt. Zusätzlich greift ein u-förmiger, endständiger Blendenumgriff 6 auf der gegenüberliegenden Seite des Blendenbasisteils 4 in einen von der Säule 2c ausgebildeten Türflansch 8 ein. Auch dadurch erfolgt eine Lagefestlegung in Fahrzeugquerrichtung Y. Blendenumgriff 6 und Türflansch 8 weisen jeweils eine Öffnung 10 bzw. 11 auf, die im verbauten Zustand koaxial zueinander liegen. Von diesem Öffnungspaar 10 und 11 hat eine Zierblende 3 vorzugsweise zwei. Die Öffnungen 10 und 11 werden jeweils von einem Exzenter 9, wie er in Fig. 5 näher gezeigt ist, durchsetzt. Der Exzenter 9 erlaubt eine Einstellung einer Toleranzlage und eine Lagefestlegung in Fahrzeuglängsrichtung X und Fahrzeughochrichtung Z. Die Säule 2c trägt ferner eine Profildichtung 12 zur Abdichtung eines Türspalts zu einer Fahrzeugkarosserie.

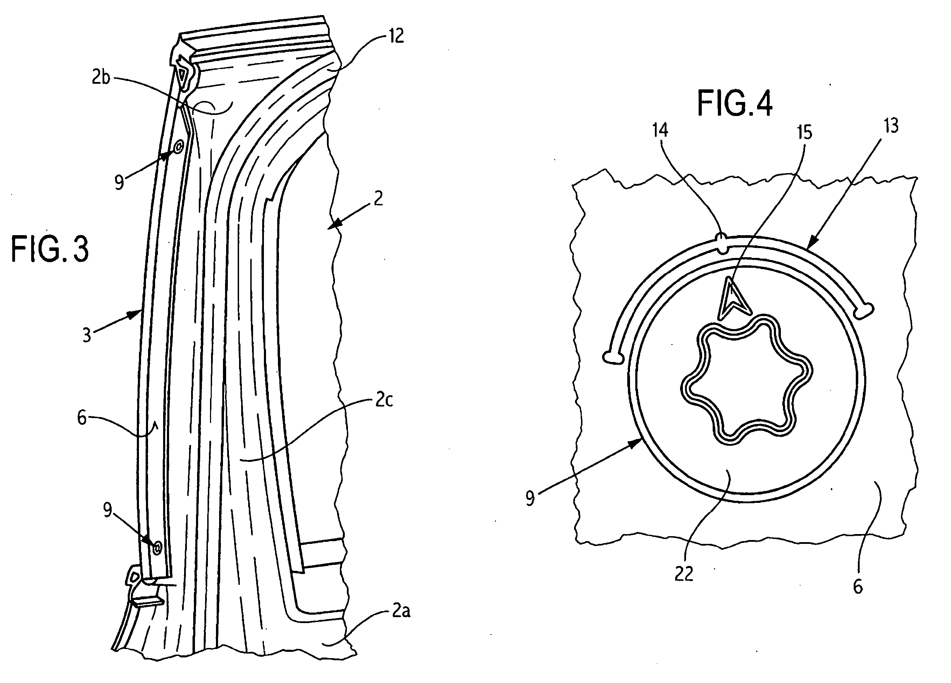

Die Fig. 3 zeigt die Innenseite einer Fahrzeugtür 2 mit Türkörper 2a, Türrahmen 2b, Säule 2c und einer Zierblende 3 im verbauten Zustand. Eine Profildichtung 12 erstreckt sich über Türkörper 2a, Türrahmen 2b und Säule 2c. Ein Blendenumgriff 6 umgreift einen in Fig. 2 erkennbaren Türflansch 8 der Säule 2c. In einem oberen und einem unteren Bereich des Blendenumgriffs 6 ist jeweils ein Exzenter 9 angeordnet, die auch im verbauten Zustand der Zierblende 3 und bei geöffneter Fahrzeugtür 2 zugänglich sind.

In Fig. 4 ist ein in den Blendenumgriff 6 eingesetzter Exzenter 9 im Detail gezeigt. Zur leichteren Einstellbarkeit ist in den Blendenumgriff 6 eine Skala 13 mit einem Nullpunkt 14 eingeprägt. Demgegenüber hat der Exzenter 9 einen in seinen Kopf 22 eingeprägten Marker 15. Steht der Marker 15 auf dem Nullpunkt 14, dann befindet sich das System in Konstruktionslage. Durch ein Verdrehen des Exzenters 9 entlang der Skala 13 kann die Toleranzlage in Fahrzeuglängsrichtung X und Fahrzeughochrichtung Z eingestellt werden.

Gemäß Fig. 5 hat ein Exzenter 9 einen flachen Kopf 22, an dem sich ein zylindrischer Exzenter-Mittelteil 24 anschließt. Der Exzenter-Mittelteil 24 trägt auf seiner dem Kopf 22 gegenüberliegenden Seite einen Absatz 21, wobei Kopf 22 und Absatz 21 koaxial zueinander angeordnet sind. Der Exzenter-Mittelteil 24 liegt dazu exzentrisch. Auf der Mantelfläche des Exzenter-Mittelteils 24 sind zwei gegenüberliegende Federhaken 16 angeordnet. Auf der Unterseite des Kopfes 22 stehen zwei dazu korrespondierende Rastnasen 17 hervor.

Die Fig. 6 zeigt den Blendenumgriff 6 mit einer Öffnung 10 für einen in Fig. 5 dargestellten Exzenter 9. Die Öffnung 10 hat zwei Freisparungen 19, die auf die Federhaken 16 des Exzenters 9 abgestimmt sind. Weiterhin ist die Öffnung 10 mit mehreren Vertiefungen 18 gesäumt, die auf die Rastnasen 17 des Exzenters 9 abgestimmt sind. In den Blendenumgriff 6 ist ferner eine Skala 13 mit einem Nullpunkt 14 eingeprägt. Koaxial zu der Öffnung 10 befindet sich auf der Innenfläche 4b des Blendenbasisteils 4 ein Sackloch 23, in dem sich der Absatz 21 des Exzenters 9 abstützen kann.

Die Fig. 7 zeigt die Säule 2c einer Fahrzeugtür 2 mit einer als Langloch ausgebildeten Öffnung 11. Eine weitere Öffnung 11 in der Säule 2c, die vorliegend nicht dargestellt ist, ist demgegenüber als Rundloch ausgeführt. In die Öffnung 11 ist exemplarisch ein Exzenter 9 des in Fig. 5 gezeigten Typs mit Kopf 22, Exzenter-Mittelteil 24 und Absatz 21 eingesetzt. Der Exzenter-Mittelteil 24 stützt sich dabei am Rand der Öffnung 11 ab.

### Liste der Bezugszeichen:

- X: Fahrzeuglängsrichtung
- Y: Fahrzeugquerrichtung
- Z: Fahrzeughochrichtung

- 1: Fahrzeug
- 2: Fahrzeugtür
- 2a: Türkörper
- 2b: Türrahmen
- 2c: Säule
- 3: Zierblende
- 4: Blendenbasisteil
- 4a: Zierfläche
- 4b: Innenfläche
- 5: Steg
- 6: Blenderiumgriff
- 7: Führung
- 8: Türflansch
- 9: Exzenter
- 10: Öffnung
- 11: Öffnung
- 12: Profildichtung
- 13: Skala
- 14: Nullstellung
- 15: Marker
- 16: Federhaken
- 17: Rastnasen
- 18: Vertiefung
- 19: Freisparung
- 21: Absatz
- 22: Kopf
- 23: Sackloch
- 24: Exzenter-Mittelteil

## Patentansprüche

1. Zierblende (3) für eine Fahrzeugtür (2), aufweisend einen Blendenbasisteil (4) mit einer im eingebauten Zustand von außen sichtbaren Zierfläche (4a) und einer zur Fahrzeugmitte weisenden Innenfläche (4b), sowie einen randseitigen, u-förmig ausgebildeten Blendenumgriff (6) zur Aufnahme eines in den Blendenumgriff (6) einführbaren Türflansches (8), **dadurch gekennzeichnet, dass** ein von der Innenfläche (4b) abgehender und in Längserstreckung des Blendenbasisteils (4) verlaufender Steg (5) zur Lagefestlegung in Fahrzeugquerrichtung (Y) mit einer türseitigen Führung (7) zusammenwirkt und der Blendenumgriff (6) mit dem Türflansch (8) über zumindest ein Befestigungsmittel (9) zur Einstellung einer Toleranzlage in Fahrzeuglängsrichtung (X) und/oder Fahrzeughochrichtung (Z) verbunden ist.

2. Zierblende nach Anspruch 1, **dadurch gekennzeichnet, dass** das zumindest eine Befestigungsmittel (9) in korrespondierende Öffnungen (10, 11) des Blendenumgriffs (6) und des Türflansches (8) einsetzbar ist.

3. Zierblende nach Anspruch 2, **dadurch gekennzeichnet, dass** der Blendenumgriff (6) mit dem Türflansch (8) durch mindestens zwei Befestigungsmittel (9) verbunden ist, wobei ein erstes Befestigungsmittel (9) zur Lagefestlegung in Fahrzeuglängsrichtung (X) und Fahrzeughochrichtung (Z) und ein zweites Befestigungsmittel (9) zur Lagefestlegung in Fahrzeuglängsrichtung (X) dient.

4. Zierblende nach einem der Ansprüche 1 bis 3, **dadurch gekennzeichnet, dass** die Befestigungsmittel (9) als Exzenter ausgebildet sind.

5. Zierblende nach Anspruch 4, **dadurch gekennzeichnet, dass** die Exzenter (9) mit dem Blendeumgriff (6) einen Formschluss ausbilden.

6. Zierblende nach einem der Ansprüche 1 bis 5, **dadurch gekennzeichnet, dass** eine Öffnung (11) im Türflansch (8) als Rundloch und eine weitere Öffnung (11) im Türflansch (8) als Langloch ausgebildet sind.

7. Verfahren zum Verbau einer Zierblende (3) an einer Fahrzeugtür (2), wobei die Zierblende (3) einen Blendenbasisteil (4) mit einer im eingebauten Zustand von außen sichtbaren Zierfläche (4a) und einer zur Fahrzeugmitte weisenden Innenfläche (4b), sowie einen randseitigen, u-förmig ausgebildeten Blendenumgriff (6) zur Aufnahme eines in den Blendenumgriff (6) einführbaren Türflansches (8) aufweist, umfassend die folgenden Schritte:
- Einführen einer türseitigen Führung (7) in einen von der Innenfläche (4b) abgehenden und in Längserstreckung des Blendenbasisteils (4) verlaufenden Steg (5);
- Einführen des Türflansches (8) in den Blendenumgriff (6);
- Verbinden des Blendenumgriffs (6) mit dem Türflansch (8) durch zumindest ein Befestigungsmittel (9);
- Einstellen einer Toleranzlage des Blendenbasisteils (4) in Fahrzeuglängsrichtung (X) und/oder Fahrzeughochrichtung (Z) mittels des zumindest einen Befestigungsmittels (9).

8. Verfahren nach Anspruch 7, **dadurch gekennzeichnet, dass** mindestens zwei Befestigungsmittel (9) den Blendenumgriff (6) mit dem Türflansch (8) verbinden, wobei ein erstes Befestigungsmittel (9) zur Einstellung einer Toleranzlage in Fahrzeuglängsrichtung (X) und Fahrzeughochrichtung (Z) und ein zweites Befestigungsmittel (9) zur Einstellung einer Toleranzlage in Fahrzeuglängsrichtung (X) dient.

9. Verfahren nach Anspruch 7 oder 8, **dadurch gekennzeichnet, dass** der Blendenumgriff (6) und der Türflansch (8) korrespondierende Öffnungen (10, 11) aufweisen, in denen jeweils ein als Exzenter ausgebildetes Befestigungsmittel (9) angeordnet wird.

10. Fahrzeug (1) mit mindestens einer Zierblende (3) nach Anspruch 1.

## Claims

1. Decorative panel (3) for a vehicle door (2), comprising a panel base part (4) having a decorative surface (4a) visible from the outside in the installed state and an internal surface (4b) pointing towards the centre of the vehicle, and an edge-side U-shaped panel wrap-around (6) for receiving a door flange (8) which can be inserted into the panel wrap-around (6), **characterised in that** a web (5), which starts from the internal surface (4b) and extends in the longitudinal extension of the panel base part (4), for fixing the position in the transverse direction (Y) of the vehicle cooperates with a door-side guide (7) and the panel wrap-around (6) is connected to the door flange (8) via at least one fastening means (9) for setting a tolerance zone position in the longitudinal direction (X) of the vehicle and/or vertical direction (Z) of the vehicle.

2. Decorative panel according to claim 1, **characterised in that** the at least one fastening means (9) can be inserted into corresponding openings (10, 11) in the panel wrap-around (6) and in the door flange (8).

3. Decorative panel according to claim 2, **characterised in that** the panel wrap-around (6) is connected to the door flange (8) by at least two fastening means (9), a first fastening means (9) serving for fixing the position in the longitudinal direction (X) of the vehicle and vertical direction (Z) of the vehicle and a second fastening means (9) serving for fixing the position in the longitudinal direction (X) of the vehicle.

4. Decorative panel according to any of claims 1 to 3, **characterised in that** the fastening means (9) are configured as a cam.

5. Decorative panel according to claim 4, **characterised in that** the cam (9) forms an interlocking connection with the panel wrap-around (6).

6. Decorative panel according to any of claims 1 to 5, **characterised in that** an opening (11) in the door flange (8) is configured as a round hole and a further opening (11) in the door flange (8) is configured as an elongate hole.

7. Method for installing a decorative panel (3) on a vehicle door (2), the decorative panel (3) comprising a panel base part (4) having a decorative surface (4a) visible from the outside in the installed state and an internal surface (4b) pointing towards the centre of the vehicle, and an edge-side U-shaped panel wrap-around (6) for receiving a door flange (8) which can be inserted into the panel wrap-around (6), comprising the following steps:
- inserting a door-side guide (7) into a web (5) which starts from the internal surface (4b) and extends in the longitudinal extension of the panel base part (4);
- inserting the door flange (8) into the panel wrap-around (6);
- connecting the panel wrap-around (6) to the door flange (8) by at least one fastening means (9);
- setting a tolerance zone position of the panel base part (4) in the longitudinal direction (X) of the vehicle and/or vertical direction (Z) of the vehicle by means of the at least one fastening means (9).

8. Method according to claim 7, **characterised in that** at least two fastening means (9) connect the panel wrap-around (6) to the door flange (8), a first fastening means (9) serving for setting a tolerance zone position in the longitudinal direction (X) of the vehicle and vertical direction (Z) of the vehicle and a second fastening means (9) serving for setting a tolerance zone position in the longitudinal direction (X) of the vehicle.

9. Method according to either claim 7 or claim 8, **characterised in that** the panel wrap-around (6) and the door flange (8) have corresponding openings (10, 11) in which a fastening means (9) which is configured as a cam is arranged in each case.

10. Vehicle (1) having at least one decorative panel (3) according to claim 1.

## Revendications

1. Panneau décoratif (3) destiné à une portière de véhicule (2), présentant une partie de base de panneau (4) pourvue d'une face décorative (4a) visible, à l'état monté, depuis l'extérieur et d'une face intérieure (4b) orientée vers le centre du véhicule, ainsi qu'un pourtour de panneau (6) côté bordure, réalisé en forme de U, servant à recevoir une bride de portière (8) pouvant être introduite dans le pourtour de panneau (6), **caractérisé en ce qu'**une nervure (5) partant de la face intérieure (4b) et s'étendant le long de l'extension longitudinale de la partie de base de panneau (4) servant à la fixation en position dans le sens transversal du véhicule (Y) coopère avec une glissière (7) côté portière, et le pourtour de panneau (6) est relié à la bride de portière (8) par l'intermédiaire au moins d'un moyen de fixation (9) servant à ajuster une position tolérée dans le sens de la longueur du véhicule (X) et/ou dans le sens de la hauteur du véhicule (Z).

2. Panneau décoratif selon la revendication 1, **caractérisé en ce que** le moyen de fixation (9) au moins au nombre de un peut être inséré dans des ouvertures (10, 11) correspondantes du pourtour de panneau (6) et de la bride de portière (8).

3. Panneau décoratif selon la revendication 2, **caractérisé en ce que** le pourtour de panneau (6) est relié à la bride de portière (8) par au moins deux moyens de fixation (9), où un premier moyen de fixation (9) sert à la fixation en position dans le sens de la longueur du véhicule (X) et dans le sens de la hauteur du véhicule (Z) et un deuxième moyen de fixation (9) sert à la fixation en position dans le sens de la longueur du véhicule (X).

4. Panneau décoratif selon l'une quelconque des revendications 1 à 3, **caractérisé en ce que** les moyens de fixation (9) sont réalisés sous la forme d'excentriques.

5. Panneau décoratif selon la revendication 4, **caractérisé en ce que** les excentriques (9) réalisent avec le pourtour de panneau (6) une complémentarité de forme.

6. Panneau décoratif selon l'une quelconque des revendications 1 à 5, **caractérisé en ce qu'**une ouverture (11) est réalisée sous la forme d'un trou rond dans la bride de portière (8), et une autre ouverture (11) est réalisée sous la forme d'un trou oblong dans la bride de portière (8).

7. Procédé servant à installer un panneau décoratif (3) au niveau d'une portière de véhicule (2), où le panneau décoratif (3) présente une partie de base de panneau (4) pourvue d'une face décorative (4a) visible, à l'état monté, depuis l'extérieur et d'une face intérieure (4b) orientée vers le centre du véhicule, ainsi qu'un pourtour de panneau (6) côté bordure, réalisé en forme de U, servant à recevoir une bride de portière (8) pouvant être introduite dans le pourtour de panneau (6), comprenant les étapes qui suivent consistant à :
- introduire une glissière (7) côté portière dans une rainure (5) partant de la face intérieure (4b) et s'étendant dans l'extension longitudinale de la partie de base de panneau (4) ;
- introduire la bride de portière (8) dans le pourtour de panneau (6) ;
- relier le pourtour de panneau (6) à la bride de portière (8) par au moins un moyen de fixation (9) ;
- ajuster une position tolérée de la partie de base de panneau (4) dans le sens de la longueur du véhicule (X) et/ou dans le sens de la hauteur du véhicule (Z) au moyen du moyen de fixation (9) au moins au nombre de un.

8. Procédé selon la revendication 7, **caractérisé en ce qu'**au moins deux moyens de fixation (9) relient le pourtour de panneau (6) à la bride de portière (8), où un premier moyen de fixation (9) sert à ajuster une position tolérée dans le sens de la longueur du véhicule (X) et dans le sens de la hauteur du véhicule (Z) et un deuxième moyen de fixation (9) sert à ajuster une position tolérée dans le sens de la longueur du véhicule (X).

9. Procédé selon la revendication 7 ou 8, **caractérisé en ce que** le pourtour de panneau (6) et la bride de portière (8) présentent des ouvertures (10, 11) correspondantes, dans lesquelles est disposé respectivement un moyen de fixation (9) réalisé sous la forme d'un excentrique.

10. Véhicule (1) comprenant au moins un panneau décoratif (3) selon la revendication 1.
